# EUROPEAN PATENT SPECIFICATION

(11) **EP 4 024 683 B1**
(45) Date of publication and mention of the grant of the patent: **05.11.2025**
(21) Application number: 20931392.3
(22) Date of filing: 30.12.2020
(51) Int. Cl.: H02K 15/04, B21F 1/00, B21F 45/00, H02K 15/0421

(54) **FLAT WIRE MOTOR STATOR PLANE HAIRPIN FORMING DEVICE**
FLACHKABELMOTOR-STATOR-EBENEN-HAARNADEL-FORMVORRICHTUNG
DISPOSITIF DE FORMAGE PLAN EN ÉPINGLE À CHEVEUX DE STATOR DE MOTEUR À FIL PLAT

(30) Priority: 14.04.2020 CN 202010292102
(43) Date of publication of application: 06.07.2022
(73) Proprietor: Jee Technology Co., Ltd., Hefei, Anhui 230051 (CN)
(72) Inventor: LIU, Lei, Hefei, Anhui 230051 (CN); XIA, Shanwei, Hefei, Anhui 230051 (CN); WANG, Bo, Hefei, Anhui 230051 (CN); HU, Dongbao, Hefei, Anhui 230051 (CN)
(74) Representative: Osterhoff, Utz
(86) International application number: PCT/CN2020/141448
(87) International publication number: WO 2021/208514

(56) References cited:
- CN-A- 109 618 563
- CN-A- 109 618 563
- CN-A- 110 640 050
- CN-A- 111 509 925
- CN-U- 204 392 012
- JP-A- 2010 234 400

## Description

### TECHNICAL FIELD

The present disclosure relates to the technical field of flat wire molding of motors, in particular to a flat wire motor stator plane hairpin molding device.

### BACKGROUND

With the vigorous development of new energy vehicles, the demand for motors is increasing, and the excellent performance of the motor determines the performance of new energy vehicles. The traditional round copper wire motor stator winding is popular for a time due to its convenient assembly, but with the development of higher requirements for the motor, a motor with smaller size, stronger function and faster running speed is required.

Compared with ordinary windings, flat wire windings have the characteristics of light weight, high efficiency and low noise under high voltage under the same volume. From a technical point of view, under the same size, a larger current can be passed, a higher frequency can be adapted, and a higher quality factor can be obtained. However, due to the difficulty of assembly, the flat wire winding is not widely used.

In order to improve the performance of the flat wire winding, the number of hairpin layers needs to be increased accordingly, so there may be multiple layers of hairpins in a stator. Since the hairpins are arranged along the radial direction of the stator, the size of each layer of hairpins is different. In addition, the hairpins are arranged in a limited space. In order to avoid interference between the hairpins, the hairpins need to have corresponding avoidance space, which leads to the complicated shape of the hairpins.

In the related art, some of the hairpin molding use a simple mechanism to bend the flat wire into a simple hairpin. However, for hairpins with complex shapes, press-fit molding cannot be realized, and some equipment can only mold hairpins of specific shapes, and the cost of molding molds is relatively high. There are also some devices in the existing technology that can bend hairpins with complex shapes, but are not flexible enough to adapt to the molding of hairpins of various sizes.

Besides, some flat wire molding devices are stamping equipment. Although the flat wire can be punched into a preset shape, the paint film of the flat wire is damaged greatly, which will shorten the life of the motor.

CN109618563A discloses a coil segment forming apparatus, a coil segment forming method and a manufacturing apparatus of an electrical rotating machine, whereby coil segments with various kinds of shape can be formed without exchanging a press die, and it is not necessary that a lot of coil segments of various kinds of shape are preliminarily formed and stocked is provided. The coil segment forming apparatus includes a first bending section for bending in the same plane a linear wire rod into a predetermined shape consisting of a pair of slot insertion portions that are substantially parallel to each other and a linking portion for connecting the pair of slot insertion portions. The first bending section has a plurality of jigs arranged on the same plane for supporting the wire rod, and a plurality of drive mechanisms for moving respectively the plurality of jigs on the same plane so that the wire rod is formed in the predetermined shape based on moving amounts respectively set depending on shape conditions of the coil segment to be formed.

### SUMMARY

In order to overcome the defects of the related art, the purpose of the present disclosure is to provide a flat wire motor stator plane hairpin molding device according to claim 1, which is suitable for molding flat wire hairpins of various shapes and sizes, and meets the requirements of high versatility.

For this purpose, the present disclosure provides a flat wire motor stator plane hairpin molding device, including: two molding mechanisms provided symmetrically on left and right, wherein each molding mechanism includes a molding die assembly and a molding driving mechanism,
two molding die assemblies provided symmetrically on left and right include a pair of third indenters centrally arranged, a pair of second indenters located outside the pair of third indenters, and a pair of first indenters located outside the pair of second indenters, top surfaces of all indenters are provided with molding grooves for placing flat wire straight strips,
the molding driving mechanism is configured to drive the molding die assembly to rotate around a rotation center to bend a middle of a flat wire, drive the second indenter to translate relative to a third indenter to adjust a bending length of a middle bending section of the flat wire, and drive the first indenter to deflect relative to a second indenter to bend a long straight leg of the flat wire.

Further, the molding driving mechanism includes a base, a lower actuator, a first arc guide rail, a second arc guide rail, a lower guide block, a rotating plate, and a first cam follower, and is configured to drive the rotating plate to rotate along the first arc guide rail and the second arc guide rail,
the molding driving mechanism further includes a front actuator, a front connecting member provided on an upper side of the front actuator, and a transition plate,
the molding driving mechanism further includes a rear actuator, a rear connecting member provided on an upper side of the rear actuator, a cam shift fork, a second cam follower, and a rotating block, a rotating shaft of the rotating block is fixedly connected to the transition plate,
a first indenter is fixedly connected with the rotating block, the second indenter is fixedly connected with the transition plate, and the rotating plate is fixedly connected with the third indenter,
the rear actuator is configured to drive the rotating block to rotate, so as to drive the first indenter to deflect relative to the second indenter; the rear actuator is configured to drive the second indenter and the first indenter as a whole to translate relative to the third indenter, when the front actuator and the rear actuator work synchronously.

Further, a pressing plate is provided between the first arc guide rail and the base.

Further, the lower actuator is located in a gap between the first arc guide rail and the second arc guide rail.

Further, the rotating plate is provided with a first slider matched with the first arc guide rail and a second slider matched with the second arc guide rail, and a position of the first slider is offset from a radial direction of the second slider.

Further, the molding device is configured for bending a symmetrical plane U-shaped hairpin and an asymmetrical plane U-shaped hairpin, that is, the hairpins include the U-shaped symmetrical hairpin and the U-shaped asymmetric hairpin.

Further, a top thread rod is slidably provided in the second indenter, and a top of the top thread rod is protruded into the molding groove.

Further, a top thread cylinder is provided on the rotating plate, and a top thread transition rod is provided between the top thread cylinder and the top thread rod.

Further, a first spring is provided between the top thread rod and the second indenter, and a first snap spring is provided at a bottom of the top thread rod.

Further, the top thread transition rod is provided in the rotating shaft connecting the transition plate and the rotating block, the top thread transition rod is provided with a second spring, and a second snap spring is provided at a bottom of the top thread transition rod.

Compared with the related art, the beneficial effects of the present disclosure are as follows.
1. The present disclosure provides a flat wire motor stator plane hairpin molding device. The movement of the indenter is controlled by the displacement of different actuators. For hairpins with different shapes, the shape of the hairpin on the plane can be controlled by the displacement of the electric actuator, which has strong adaptability, high versatility and high work efficiency. It is possible to use a limited number of molds to complete the molding of hairpins with different shapes, which reduces design costs and processing costs, and improves economic benefits.
2. By arranging the top thread cylinder, top thread rod and top thread transition rod, the molded flat wire hairpin can be taken out from the molding groove in the indenter to realize automation, improve work efficiency and reduce manpower.
3. The flat wire motor stator plane hairpin molding device of the present disclosure realizes the arc molding of the U-shaped part of the hairpin through simple bending, and the damage to the flat wire is small compared with the stamping molding; meanwhile, the overall structure of the present disclosure is compact and coordinated, and does not produce interference phenomenon.

In addition to the objects, features and advantages described above, the present disclosure has other objects, features and advantages. The present disclosure will be described in further detail below with reference to the drawings.

### BRIEF DESCRIPTION OF THE DRAWINGS

The accompanying drawings molding a part of the present disclosure are used to provide further understanding of the present disclosure, and the exemplary embodiments of the present disclosure and their descriptions are used to explain the present disclosure and do not constitute an improper limitation of the present disclosure.
FIG. 1 is an axial side view of a flat wire motor stator plane hairpin molding device of the present disclosure.
FIG. 2 is an axial side view of a partial structure of the flat wire motor stator plane hairpin molding device of the present disclosure.
FIG. 3 is a top view of the flat wire motor stator plane hairpin molding device of the present disclosure.
FIG. 4 is a front view of the flat wire motor stator plane hairpin molding device of the present disclosure.
FIG. 5 is a cross-sectional view of a partial mechanism of the flat wire motor stator plane hairpin molding device of the present disclosure.
FIG. 6 is a top view of a partial mechanism of the flat wire motor stator plane hairpin molding device of the present disclosure.
FIG. 7 is a schematic view of a straight state before the flat wire hairpin in the present disclosure is molded.
FIG. 8 is a schematic structural view of a shape of a flat wire hairpin that can be molded by using the molding device of the present disclosure.

### Description of reference signs

1 base; 3 lower actuator; 5 first arc guide rail; 7 pressing plate; 9 second arc guide rail; 11 lower guide block; 13 top thread cylinder; 15 top thread transition rod; 17 second spring; 19 second snap spring; 21 top thread rod; 23 first spring; 25 first snap spring; 27 rotating plate; 29 front actuator; 31 rear actuator; 33 front connecting member; 35 rear connecting member; 37 second cam follower; 39 cam fork; 41 rotating block; 43 transition plate; 45 first indenter; 47 second indenter; 49 third indenter; 51 first cam follower; 60 flat wire hairpin; 61 first bending portion; 62 second bending portion; 63 third bending portion

### DETAILED DESCRIPTION OF THE EMBODIMENTS

It should be noted that the embodiments in the present disclosure and the features of the embodiments can be combined with each other in the case of no conflict. The present disclosure will be described in detail below with reference to the accompanying drawings and in conjunction with the embodiments.

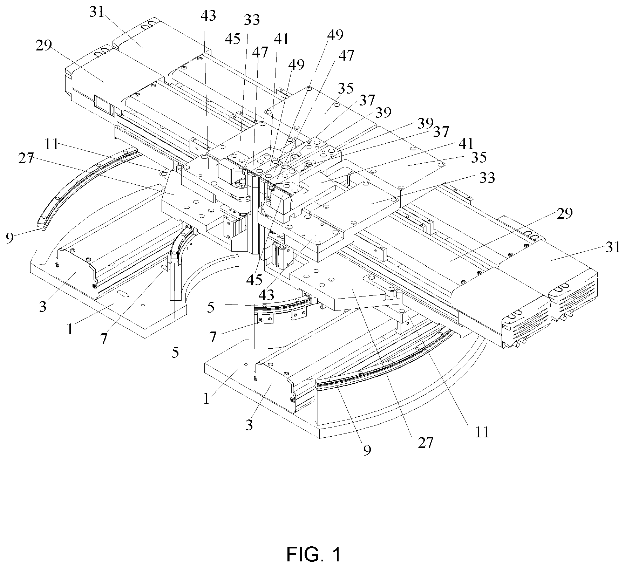

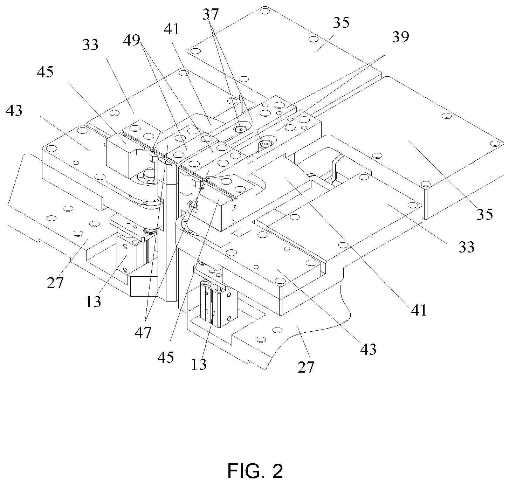

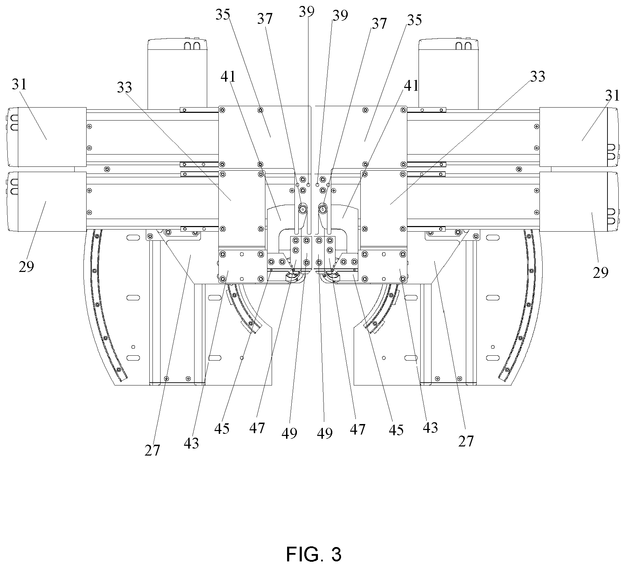

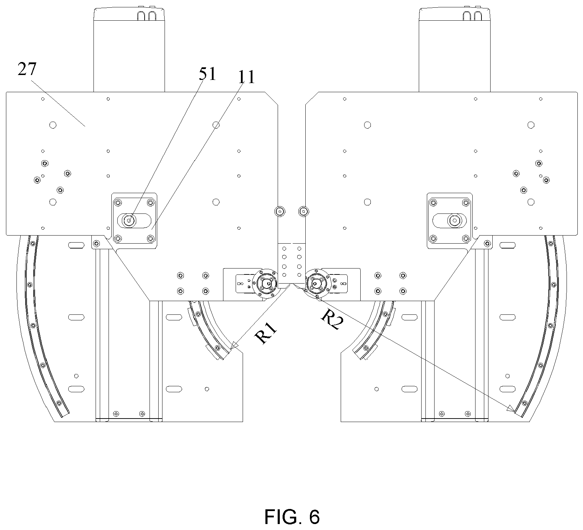

FIG. 1 to FIG. 8 show some embodiments of the present disclosure.

As shown in FIG. 1 to FIG. 6, the present disclosure provides a flat wire motor stator plane hairpin molding device, including two molding mechanisms provided symmetrically on left and right. The mechanical structures of the two molding mechanisms are exactly the same. The molding mechanism includes a molding die assembly and a molding driving mechanism.

As shown in FIG. 1, FIG. 2 and FIG. 3, two molding die assemblies provided symmetrically on left and right include a pair of third indenters 49 centrally arranged, a pair of second indenters 47 located outside a pair of third indenters 49, and a pair of first indenters 45 located outside a pair of second indenters 47. Top surfaces of all indenters are provided with molding grooves for placing flat wire straight strips.

The molding driving mechanism is configured to drive the molding die assembly to rotate around a rotation center to bend a middle of a flat wire, configured to drive the second indenter 47 to translate relative to the third indenter 49 to adjust a bending length of a middle bending section of the flat wire, and configured to drive the first indenter 45 to deflect relative to the second indenter 47 to bend a long straight leg of the flat wire.

The molding driving mechanism includes a base 1, a lower actuator 3 mounted on an upper end of the base 1, a first arc guide rail 5, a second arc guide rail 9, a lower guide block 11, a rotating plate 27, and a first cam follower 51. The rotating plate 27 is mounted on the first arc guide rail 5 and the second arc guide rail 9, and is slidably connected with the first arc guide rail 5 and the second arc guide rail 9. The lower guide block 11 is fixedly connected with the slider on the lower actuator 3, and the lower guide block 11 is connected with the rotating plate 27 through the first cam follower 51, and the third indenter 49 is provided on the rotating plate 27.

The lower actuator 3 is located in the gap between the first arc guide rail 5 and the second arc guide rail 9. The rotating plate 27 is provided with a first slider matched with the first arc guide rail 5 and a second slider matched with the second arc guide rail 9. The position of the first slider is offset from the radial direction of the second slider, that is, a first connecting line is formed by the first slider and the arc center where it is located, and a second connecting line is formed by the second slider and the arc center where it is located, the first connecting line and the second connecting line intersect but are not parallel, such that the lower actuator 3 drives the rotating plate 27 to move more smoothly on the first arc guide rail 5 and the second arc guide rail 9.

When the lower actuator 3 on the left molding mechanism and the lower actuator 3 on the right molding mechanism work simultaneously, the lower actuator 3 can drive the lower guide block 11 to move linearly, thereby the first cam follower 51 drives the rotating plate 27 to move along the first arc guide rail 5 and the second arc guide rail 9, so that the rotating plate 27 and the third indenter 49 rotate above the base.

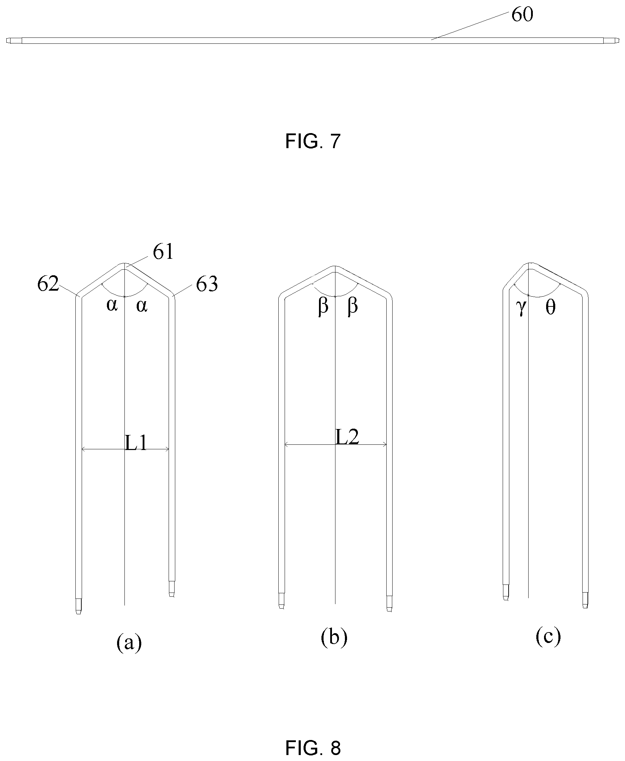

The upper ends of the third indenter 49 on the left molding mechanism and the third indenter 49 on the right molding mechanism are provided with molding grooves. Due to the relative rotation between the two indenters 49, the flat wire hairpin placed in the molding groove can be folded, so that the flat wire hairpin produces a first bending portion 61 (as shown in FIG. 8).

Specially, as shown in FIG. 1, a front actuator 29 and a rear actuator 31 are fixedly installed on the upper end of the rotating plate 27. The front connecting member 33 is installed on the slider of the front actuator 29, and the transition plate 43 is fixedly installed on the front connecting member 33. The rotating block 41 is mounted on the transition plate 43, and the rotating block 41 is rotatably connected to the transition plate 43 through a rotating shaft. The rear connecting member 35 is installed on the slider of the rear actuator 31, and the cam fork 39 is fixed on the upper end of the rear connecting member 35. The second cam follower 37 is fixedly connected with the rotating block 41, and the upper end of the second cam follower 37 is located in the waist-shaped groove of the cam fork 39.

The first indenter 45 is fixedly installed on the upper end of the front part of the rotating block 41, and the second indenter 47 is fixedly installed on the transition plate 43. The first indenter 45 and the second indenter 47 are provided with molding grooves, and the two molding grooves are collinear, so that the flat wire in a straight state that needs to be formed can be placed.

When the rear actuator 31 on the two molding mechanisms works, the rear actuator 31 drives the rear connecting member 35 and the cam fork 39 to move linearly to the outside, the second cam follower 37 moves with the cam fork 39, thereby driving the rotating block 41 to rotate on the transition plate 43 around the rotating shaft between the two, and the rotating block 41 can drive the first indenter 45 to rotate together. At the same time, since the front actuator 29 does not work, the relative positions of the second indenter 47 and the third indenter 49 remain unchanged. Through the rotation of a pair of first indenters 45, the flat wire hairpin 60 can be bent and formed, so that the flat wire hairpin 60 has a second bending portion 62 and a third bending portion 63 (as shown in FIG. 8).

Therefore, as shown in FIG. 7 and FIG. 8, through the above structure, it is possible to fold the flat wire in a straight state into a flat U-shaped flat wire hairpin with a first bending portion 61, a second bending portion 62, and a third bending portion 63. The U-shaped flat wire hairpin includes a symmetrical plane U-shaped hairpin and an asymmetric plane U-shaped hairpin.

The front actuator 29 can also work simultaneously with the rear actuator 31. The front actuator 29 can drive the front connecting member 33, the transition plate 43 installed on the front connecting member 33, the rotating block 41, the first indenter 45, the second indenter 47, and the second cam follower 37 to move to the outside. At the same time, the rear actuator can drive the rear connecting member 35 and the cam fork 39 to move to the outside.

When a distance moved by the front actuator 29 is the same as a distance moved by the rear actuator 31, the positions of the second cam follower 37 and the cam fork 39 remain unchanged, so that the rotating block 41 does not rotate relative to the transition plate 43, that is, the positions of the first indenter 45 and the second indenter 47 remain unchanged.

However, since the front actuator 29 drives the front connecting member 33 and the transition plate 43 to move, that is, the distance between the second indenter 47 and the third indenter 49 changes, such that the distance from a contact surface of the first indenter 45 and the second indenter 47 to a contact surface of two third indenters 49 reaches the preset value, this distance is consistent with the distance between the second bending portion 62 and the first bending portion 61 in the flat wire hairpin to be formed.

By controlling the operation of a pair of rear actuators 31, the first indenter 45 on the two molding mechanisms is rotated, and then the flat wire hairpin is bent and formed, such that the flat wire hairpin produces the second bending portion 62 and the third bending portion 63. Therefore, the shape of the hairpin in space can be controlled by the displacement of the electric actuator, and flat wire hairpins of different sizes can be bent.

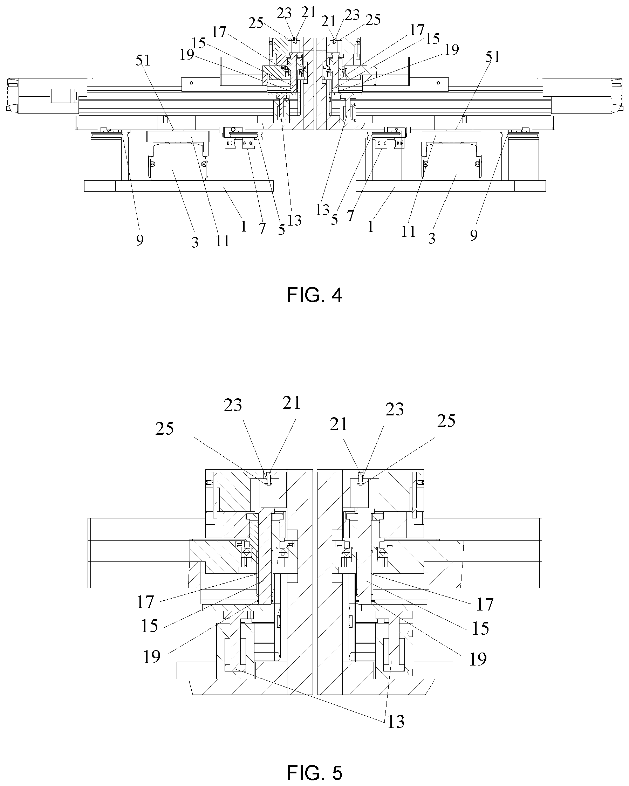

In an embodiment, as shown in FIG. 4 and FIG. 5, a top thread transition rod 15 is provided in the rotating shaft connecting the transition plate 43 and the rotating block 41, the top thread transition rod 15 is sleeved with a second spring 17, and the bottom of the top thread transition rod 15 is provided with a second snap spring 19, and the second snap spring 19 is used to fix the second spring 17. When the top thread transition rod 15 is installed in the rotating shaft, the second spring 17 is in a compressed state, which can force the top thread transition rod 15 to move downward along the axis in the transition plate 43.

The second indenter 47 is provided with a top thread rod 21 that linearly slides in the vertical direction, and the top of the top thread rod 21 is located in the molding groove at the upper end of the second indenter 47 when the top thread rod 21 moves upward. A first spring 23 is sleeved in the middle and lower part of the top thread rod 21, and a first snap spring 25 is provided at the bottom of the top thread rod 21, and the first snap spring 25 is used for fixing the first spring 23. When the top thread rod 21 is installed in the second indenter 47, the first spring 23 is in a compressed state, which can force the top thread rod 21 to move downward along the axis in the second indenter 47. The top thread rod 21 is located above the top thread transition rod 15, and the top thread cylinder 13 is provided on the lower side of the top thread rod 21, and the top thread cylinder 13 is fixedly installed on the rotating plate 27.

When the top thread cylinder 13 moves axially, it can withstand the upward axial movement of the top thread transition rod 15, thereby pushing the top thread rod 21 to move upward axially in the second indenter 47, such that the top of the top thread rod 21 protrudes from the bottom of the molding groove above the second indenter 47, so that the formed flat wire hairpin is pushed out from the upper part of the second indenter 47 to achieve the purpose of unloading.

In an embodiment, as shown in FIG. 1, the first arc guide rail 5 is connected with the base 1 and pressed by the pressing plate 7, such that the installation of the first arc guide rail 5 is more stable, and the rotating plate 27 slides on the first arc guide rail 5 more smoothly.

The working process of the flat wire motor stator plane hairpin molding device of the present disclosure is as follows.

### Working process 1

First, by controlling six actuators to work, the molding grooves of the first indenter 45, the second indenter 47 and the third indenter 49 on the left molding mechanism are collinear with the molding grooves of the first indenter 45, the second indenter 47 and the third indenter 49 on the right molding mechanism, then the straight flat wire hairpin is placed in a straight molding groove formed by the first indenter 45, the second indenter 47, and the third indenter 49.

Then, by controlling a pair of lower actuators 3 on the left molding mechanism and the right molding mechanism to move linearly respectively, and make the front actuator 29 and the rear actuator 31 in a non-working state, the linear motion of the lower actuator 3 is converted into the rotary motion of the rotating plate 27, so that the first indenter 45, the second indenter 47, and the third indenter 49 rotate along with the rotating plate 27. The third indenter 49 on the left molding mechanism and the third indenter 49 on the right molding mechanism rotate relative to each other, which can fold the flat wire hairpin, so that the flat wire hairpin produces the first bending portion 61.

By controlling the pair of rear actuators 31 on the left molding mechanism and the right molding mechanism to work respectively, the rear actuator 31 drives the rear connecting member 35 and the cam fork 39 to move laterally and linearly, the second cam follower 37 moves with the cam fork 39, and then drives the rotating block 41 to rotate on the transition plate 43 around the rotation axis of the two, and the rotating block 41 drives the first indenter 45 to rotate. Meanwhile, since the front actuator 29 does not work, the positions of the second indenter 47 and the third indenter 49 remain unchanged.

Through the rotation of the first indenter 45 on the left molding mechanism relative to the second indenter 47, the flat wire hairpin can be bent and formed, so that the flat wire hairpin can produce the second bending portion 62. Through the rotation of the first indenter 45 on the right molding mechanism relative to the second indenter 47, the flat wire hairpin can be bent and formed, so that the flat wire hairpin can produce the third bending portion 63.

Finally, by controlling the axial expansion and contraction of a pair of top thread cylinders 13 on the left molding mechanism and the right molding mechanism, it is possible to push the top thread transition rod 15 to move axially upward, and then push the top thread rod 21 to move axially upward in the second indenter 47, the top of the top thread rod 21 protrudes from the bottom of the molding groove on the second indenter 47, so that the formed flat wire hairpin is pushed out from the molding groove on the second indenter 47 to achieve the purpose of discharging.

### Working process 2

When the distance from the second bending portion 62 to the first bending portion 61 and the distance from the third bending portion 63 to the first bending portion 61 in the flat wire hairpin to be formed change, it is necessary to adjust the relative positions of the first indenter 45 and the third indenter 49 in the molding device.

Firstly, by controlling a pair of front actuators 29 and a pair of rear actuators 31 on the left molding mechanism and the right molding mechanism to work simultaneously, the front actuator 29 drives the front connecting member 33, the transition plate 43 connected with the front connecting member 33, the rotating block 41, the first indenter 45, the second indenter 47, and the second cam follower 37 to move to the outside. At the same time, the rear actuator 31 drives the rear connecting member 35 and the cam fork 39 to move to the outside.

The movement distance of the front actuator 29 is controlled to be consistent with the movement distance of the rear actuator 31, so that the positions of the second cam follower 37 and the cam fork 39 remain unchanged, and the rotating block 41 does not rotate relative to the transition plate 43, that is, the positions of the first indenter 45 and the second indenter 47 remain unchanged.

However, since the front actuator 29 drives the front connecting member 33 and the transition plate 43 to move, that is, the distance between the second indenter 47 and the third indenter 49 changes, such that the distance from the contact surface of the first indenter 45 and the second indenter 47 to the contact surface of two third indenters 49 reaches the preset value. This distance is consistent with the distance between the second bending portion 62 and the first bending portion 61 in the flat wire hairpin to be formed.

Then, by controlling a pair of lower actuators 3 on the left molding mechanism and the right molding mechanism to work, the third indenter 49 on the left molding mechanism and the third indenter 49 on the right molding mechanism rotate relative to each other, which can fold the flat wire hairpin, so that the flat wire hairpin produces a first bending portion 61.

By controlling a pair of rear actuators 31 on the left molding mechanism and the right molding mechanism to work, the first indenter 45 on the left molding mechanism rotates relative to the second indenter 47, and the first indenter 45 on the right molding mechanism rotates relative to the second indenter 47, thus the flat wire hairpin is bent and formed, so that the flat wire hairpin has a second bending portion 62 and a third bending portion 63.

Finally, by controlling the extension and retraction of a pair of top thread cylinders 13 on the left molding mechanism and the right molding mechanism, the formed flat wire hairpin is pushed out from the molding groove on the second indenter 47, which is convenient for operators or manipulators to take.

The above descriptions are only preferred embodiments of the present disclosure, and are not intended to limit the present disclosure. For those skilled in the art, the present disclosure may have various modifications and changes. Any modification, replacement, improvement, etc. made within the principle of the present disclosure shall be included within the protection scope of the present disclosure.

Finally, by controlling the extension and retraction of a pair of top thread cylinders 13 on the left molding mechanism and the right molding mechanism, the formed flat wire hairpin is pushed out from the molding groove on the second indenter 47, which is convenient for operators or manipulators to take.

The above descriptions are only preferred embodiments of the present disclosure, and are not intended to limit the present disclosure. For those skilled in the art, the present disclosure may have various modifications and changes. The scope of the invention is defined by the appended claims.

## Claims

1. A flat wire motor stator plane hairpin molding device comprising: two molding mechanisms provided symmetrically on left and right, wherein
each molding mechanism comprises a molding die assembly and a molding driving mechanism,
two molding die assemblies provided symmetrically on left and right comprise a pair of third indenters (49) centrally arranged, a pair of second indenters (47) located outside the pair of third indenters (49), and a pair of first indenters (45) located outside the pair of second indenters (47), top surfaces of all indenters are provided with molding grooves for placing flat wire straight strips,
the molding driving mechanism is configured to drive the molding die assembly to rotate around a rotation center to bend a middle of a flat wire, drive the second indenter (47) to translate relative to a third indenter (49) to adjust a bending length of a middle bending section of the flat wire, and drive the first indenter (45) to deflect relative to a second indenter (47) to bend a long straight leg of the flat wire,
the molding driving mechanism comprises a base (1), a lower actuator (3), a first arc guide rail (5), a second arc guide rail (9), a lower guide block (11), a rotating plate (27), and a first cam follower (51), and is configured to drive the rotating plate (27) to rotate along the first arc guide rail (5) and the second arc guide rail (9),
the molding driving mechanism further comprises a front actuator (29), a front connecting member (33) provided on an upper side of the front actuator (29), and a transition plate (43),
the molding driving mechanism further comprises a rear actuator (31), a rear connecting member (35) provided on an upper side of the rear actuator (31), a cam shift fork (39), a second cam follower (37), and a rotating block (41), a rotating shaft of the rotating block (41) is fixedly connected to the transition plate (43),
a first indenter (45) is fixedly connected with the rotating block (41), the second indenter (47) is fixedly connected with the transition plate (43), and the rotating plate (27) is fixedly connected with the third indenter (49),
the rear actuator (31) is configured to drive the rotating block (41) to rotate, so as to drive the first indenter to deflect relative to the second indenter; the rear actuator (31) is also configured to drive the second indenter (47) and the first indenter (45) as a whole to translate relative to the third indenter (49), when the front actuator (29) and the rear actuator (31) work synchronously;
**characterized in that**,
a top thread rod (21) is slidably provided in the second indenter (47), and a top of the top thread rod (21) is configured to be protruded into the molding groove.
a top thread cylinder (13) is provided on the rotating plate (27), and a top thread transition rod (15) is provided between the top thread cylinder (13) and the top thread rod (21),
a first spring (23) is provided between the top thread rod (21) and the second indenter (47), and a first snap spring (25) is provided at a bottom of the top thread rod (21),
the top thread transition rod (15) is provided in the rotating shaft connecting the transition plate (43) and the rotating block (41), the top thread transition rod (15) is provided with a second spring (17), and a second snap spring (19) is provided at a bottom of the top thread transition rod (15).

2. The flat wire motor stator plane hairpin molding device according to claim 1, wherein a pressing plate (7) is provided between the first arc guide rail (5) and the base (1).

3. The flat wire motor stator plane hairpin molding device according to claim 1, wherein the lower actuator (3) is located in a gap between the first arc guide rail (5) and the second arc guide rail (9).

4. The flat wire motor stator plane hairpin molding device according to claim 1, wherein the flat wire motor stator plane hairpin molding device is configured for bending a symmetrical plane U-shaped hairpin and an asymmetrical plane U-shaped hairpin.

5. The flat wire motor stator plane hairpin molding device according to claim 1, wherein the rotating plate (27) is provided with a first slider matched with the first arc guide rail (5) and a second slider matched with the second arc guide rail (9), and a position of the first slider is offset from a radial direction of the second slider.

## Patentansprüche

1. Vorrichtung zum Formen von planaren Haarnadeln für einen Flachdraht-Motorstator, umfassend: zwei Formgebungsmechanismen, die symmetrisch links und rechts angeordnet sind, wobei jeder Formgebungsmechanismus eine Formwerkzeuggruppe und einen Formantriebsmechanismus umfasst,
wobei die zwei Formwerkzeugbaugruppen symmetrisch links und rechts angeordnet sind und jeweils ein Paar dritter Stempel (49), die zentral angeordnet sind, ein Paar zweiter Stempel (47), die außerhalb des Paars dritter Stempel (49) angeordnet sind, und ein Paar erster Stempel (45), die außerhalb des Paars zweiter Stempel (47) angeordnet sind, umfassen, wobei die Oberseiten aller Stempel mit Formnuten versehen sind, die zum Platzieren von Flachdraht-Geradstreifen dienen,
wobei der Formantriebsmechanismus dazu eingerichtet ist, die Formwerkzeugbaugruppe um ein Rotationszentrum zu rotieren, um eine Mitte eines Flachdrahts zu biegen, und den zweiten Stempel (47) relativ zu einem dritten Stempel (49) zu verschieben, um eine Biegelänge eines mittleren Biegebereichs des Flachdrahts einzustellen, und den ersten Stempel (45) relativ zu einem zweiten Stempel (47) zu schwenken, um ein langes gerades Bein des Flachdrahts zu biegen,
wobei der Formantriebsmechanismus eine Basis (1), einen unteren Aktuator (3), eine erste Bogenführungsschiene (5), eine zweite Bogenführungsschiene (9), einen unteren Führungsblock (11), eine Drehplatte (27) und einen ersten Kurvenfolger (51) umfasst und dazu eingerichtet ist, die Drehplatte (27) entlang der ersten Bogenführungsschiene (5) und der zweiten Bogenführungsschiene (9) zu drehen,
wobei der Formantriebsmechanismus ferner einen vorderen Aktuator (29), ein vorderes Verbindungselement (33), das auf einer Oberseite des vorderen Aktuators (29) vorgesehen ist, und eine Übergangsplatte (43) umfasst,
wobei das Formantriebsmechanismus ferner einen hinteren Aktuator (31), ein hinteres Verbindungselement (35), das auf einer Oberseite des hinteren Aktuators (31) vorgesehen ist, eine Nockenschaltgabel (39), einen zweiten Nockenmitnehmer (37) und einen Drehblock (41) umfasst, wobei eine Drehachse des Drehblocks (41) fest mit der Übergangsplatte (43) verbunden ist,
wobei ein erster Stempel (45) fest mit dem Drehblock (41) verbunden ist, der zweite Stempel (47) fest mit der Übergangsplatte (43) verbunden ist und die Drehplatte (27) fest mit dem dritten Stempel (49) verbunden ist,
wobei der hintere Aktuator (31) dazu eingerichtet ist, den Drehblock (41) zu drehen, um den ersten Stempel relativ zum zweiten Stempel zu verschwenken; wobei der hintere Aktuator (31) ferner dazu eingerichtet ist, den zweiten Stempel (47) und den ersten Stempel (45) als Einheit relativ zum dritten Stempel (49) zu verschieben, wenn der vordere Aktuator (29) und der hintere Aktuator (31) synchron arbeiten; **dadurch gekennzeichnet, dass**
ein oberer Gewindestab (21) in dem zweiten Stempel (47) verschiebbar angeordnet ist und ein oberes Ende des oberen Gewindestabs (21) eingerichtet ist, um in die Formnut vorzuragen,
ein oberer Gewindezylinder (13) auf der Drehplatte (27) vorgesehen ist und ein oberer Gewindeübergangsstab (15) ist zwischen dem oberen Gewindezylinder (13) und dem oberen Gewindestab (21) vorgesehen,
eine erste Feder (23) zwischen dem oberen Gewindestab (21) und dem zweiten Stempel (47) vorgesehen ist, und eine erste Schnappfeder (25) am Boden des oberen Gewindestabs (21) vorgesehen ist,
der obere Gewindeübergangsstab (15) in der Drehwelle vorgesehen ist, die die Übergangsplatte (43) und den Drehblock (41) verbindet, der obere Gewindeübergangsstab (15) mit einer zweiten Feder (17) versehen ist, und eine zweite Schnappfeder (19) am Boden des oberen Gewindeübergangsstabs (15) vorgesehen ist.

2. Vorrichtung zum Formen von planaren Haarnadeln für einen Flachdraht-Motorstator nach Anspruch 1, wobei eine Druckplatte (7) zwischen der ersten Bogenführungsschiene (5) und der Basis (1) vorgesehen ist.

3. Vorrichtung zum Formen von planaren Haarnadeln für einen Flachdraht-Motorstator nach Anspruch 1, wobei der untere Aktuator (3) in einem Spalt zwischen der ersten Bogenführungsschiene (5) und der zweiten Bogenführungsschiene (9) angeordnet ist.

4. Vorrichtung zum Formen von planaren Haarnadeln für einen Flachdraht-Motorstator nach Anspruch 1, wobei die Vorrichtung zum Formen von planaren Haarnadeln für Flachdraht-Motorstator dazu ausgelegt ist, eine symmetrische planare U-förmige Haarnadel und eine asymmetrische planare U-förmige Haarnadel zu biegen.

5. Vorrichtung zum Formen von planaren Haarnadeln für einen Flachdraht-Motorstator nach Anspruch 1, wobei die Drehplatte (27) mit einem ersten mit der ersten Bogenführungsschiene (5) zusammenwirkenden Schieber und einem zweiten mit der zweiten Bogenführungsschiene (9) zusammenwirkenden Schieber versehen ist, und wobei eine Position des ersten Schiebers von einer radialen Richtung des zweiten Schiebers versetzt ist.

## Revendications

1. Dispositif de moulage d'épingle à cheveux plate pour un stator de moteur à fil plat comprenant : deux mécanismes de moulage prévus symétriquement à gauche et à droite, dans lequel chaque mécanisme de moulage comprend un ensemble matrice de moulage et un mécanisme d'entraînement de moulage,
deux ensembles matrices de moulage disposés symétriquement à gauche et à droite comprennent une paire de troisièmes poinçons (49) disposés au centre, une paire de deuxièmes poinçons (47) situés à l'extérieur de la paire de troisièmes poinçons (49), et une paire de premiers poinçons (45) situés à l'extérieur de la paire de deuxièmes poinçons (47), des surfaces supérieures de tous les poinçons sont pourvues de rainures de moulage destinées à loger des bandes droites de fil plat,
le mécanisme d'entraînement de moulage est configuré pour entraîner l'ensemble matrice de moulage à tourner autour d'un centre de rotation afin de plier un milieu d'un fil plat, pour entraîner le deuxième poinçon (47) à se déplacer par rapport à un troisième poinçon (49) afin d'ajuster une longueur de pliage d'une section de pliage médiane du fil plat, et pour entraîner le premier poinçon (45) à fléchir par rapport à un deuxième poinçon (47) afin de plier une longue jambe droite du fil plat,
le mécanisme d'entraînement de moulage comprend une base (1), un actionneur inférieur (3), un premier rail de guidage en arc (5), un second rail de guidage en arc (9), un bloc de guidage inférieur (11), une plaque rotative (27) et un premier suiveur de came (51), et est configuré pour entraîner la plaque rotative (27) à tourner le long du premier rail de guidage en arc (5) et du second rail de guidage en arc (9),
le mécanisme d'entraînement de moulage comprend en outre un actionneur avant (29), un élément de liaison avant (33) prévu sur un côté supérieur de l'actionneur avant (29) et une plaque de transition (43),
le mécanisme d'entraînement de moulage comprend en outre un actionneur arrière (31), un élément de liaison arrière (35) prévu sur un côté supérieur de l'actionneur arrière (31), une fourchette de décalage de came (39), un second suiveur de came (37) et un bloc rotatif (41), un arbre rotatif du bloc rotatif (41) étant relié de manière fixe à la plaque de transition (43),
un premier poinçon (45) est relié de manière fixe au bloc rotatif (41), le deuxième poinçon (47) est relié de manière fixe à la plaque de transition (43), et la plaque rotative (27) est reliée de manière fixe au troisième poinçon (49),
l'actionneur arrière (31) est configuré pour entraîner le bloc rotatif (41) à tourner, afin d'entraîner le premier poinçon à fléchir par rapport au deuxième poinçon ; l'actionneur arrière (31) est également configuré pour entraîner le deuxième poinçon (47) et le premier poinçon (45) dans leur ensemble à se déplacer par rapport au troisième poinçon (49), lorsque l'actionneur avant (29) et l'actionneur arrière (31) fonctionnent de manière synchrone ; **caractérisé en ce que**,
une tige filetée supérieure (21) est prévue de manière coulissante dans le deuxième poinçon (47), et une partie supérieure de la tige filetée supérieure (21) est configurée pour faire saillie dans la rainure de moulage,
un cylindre fileté supérieur (13) est prévu sur la plaque rotative (27), et une tige de transition filetée supérieure (15) est prévue entre le cylindre fileté supérieur (13) et la tige filetée supérieure (21),
un premier ressort (23) est prévu entre la tige filetée supérieure (21) et le deuxième poinçon (47), et un premier ressort à encliquetage (25) est prévu au niveau d'une partie inférieure de la tige filetée supérieure (21),
la tige de transition filetée supérieure (15) est prévue dans l'arbre rotatif qui relie la plaque de transition (43) et le bloc rotatif (41), la tige de transition filetée supérieure (15) est pourvue d'un second ressort (17), et un second ressort à encliquetage (19) est prévu au niveau de la partie inférieure de la tige de transition filetée supérieure (15).

2. Dispositif de moulage d'épingle à cheveux plate pour un stator de moteur à fil plat selon la revendication 1, dans lequel une plaque de pression (7) est prévue entre le premier rail de guidage en arc (5) et la base (1).

3. Dispositif de moulage d'épingle à cheveux plate pour un stator de moteur à fil plat selon la revendication 1, dans lequel l'actionneur inférieur (3) est situé dans un espace entre le premier rail de guidage en arc (5) et le second rail de guidage en arc (9).

4. Dispositif de moulage d'épingle à cheveux plate pour un stator de moteur à fil plat selon la revendication 1, dans lequel le dispositif de moulage d'épingle à cheveux plate pour un stator de moteur à fil plat est configuré pour une épingle à cheveux plate symétrique en forme de U et une épingle à cheveux plate asymétrique en forme de U.

5. Dispositif de moulage d'épingle à cheveux plate pour un stator de moteur à fil plat selon la revendication 1, dans lequel la plaque rotative (27) est pourvue d'un premier coulisseau adapté au premier rail de guidage en arc (5) et d'un second coulisseau adapté au second rail de guidage en arc (9), et une position du premier coulisseau est décalée par rapport à une direction radiale du second coulisseau.
